# EUROPÄISCHE PATENTANMELDUNG

(11) **EP 2 018 907 A1**
(43) Veröffentlichungstag der Anmeldung: **28.01.2009**
(21) Anmeldenummer: 07014768.1
(22) Anmeldetag: 27.07.2007
(51) Int. Cl.: B01J 31/16

(54) **Immobilisierte Homogenkatalysatoren**

(71) Anmelder: GKSS-Forschungszentrum Geesthacht GmbH, 21502 Geesthacht (DE)
(72) Erfinder: Ebert Katrin, 21339 Lüneburg (DE); Fritsch Detlev Dr., 21465 Reinbek (DE); Plenio herbert, 64625 bensheim (DE); Bengtson Gisela, 22393 Hamburg (DE)
(74) Vertreter: Grebner, Christian Georg Rudolf

(57) **Zusammenfassung**

Die Erfindung betrifft ein Verfahren zum Herstellen einer Homogenkatalysatorträgereinheit, die zur Durchführung von homogenen Katalysen eingesetzt wird. Das Verfahren zeichnet sich dadurch aus, dass Homogenkatalysatoren beweglich an die, insbesondere ebene oder gekrümmte, Oberfläche eines eine, insbesondere feste, Oberfläche aufweisenden Katalysatorträgers derart immobilisiert gebunden werden, dass
a.) die Homogenkatalysatoren jeweils unter Verwendung oder Zwischenschaltung eines Spacers an die Oberfläche des Katalysatorträgers gebunden sind, so dass der an die Oberfläche des Katalysatorträgers gebundene Spacer zwischen der Oberfläche des Katalysatorträgers und dem oder den Liganden der Homogenkatalysatoren ausgebildet ist, wodurch die Homogenkatalysatoren sich auf der von der Oberfläche des Katalysatorträgers entfernten Seite oder in dem von der Oberfläche des Katalysatorträgers entfernten Halbraum befinden,
oder
b.) die Homogenkatalysatoren ohne Zwischenschaltung eines Spacers an die Oberfläche des Katalysatorträgers gebunden sind, wodurch die Homogenkatalysatoren sich auf der von der Oberfläche des Katalysatorträgers entfernten Seite oder in dem von der Oberfläche des Katalysatorträgers entfernten Halbraum befinden.

Ferner betrifft die Erfindung eine Homogenkatalysatorträgereinheit sowie eine Verwendung einer Homogenkatalysatorträgereinheit. Überdies betrifft die Erfindung eine Verwendung eines Katalysatorträgers

## Beschreibung

Die Erfindung betrifft ein Verfahren zum Herstellen einer Homogenkatalysatorträgereinheit, die zur Durchführung von homogenen Katalysen eingesetzt wird. Ferner betrifft die Erfindung eine Homogenkatalysatorträgereinheit sowie eine Verwendung einer Homogenkatalysatorträgereinheit. Überdies betrifft die Erfindung eine Verwendung eines Katalysatorträgers.

Bei einer homogenen Katalyse befindet sich der Katalysator in derselben Phase oder im selben Aggregatzustand wie das Substrat, z. B. mit dem Reaktionspartner gemeinsam in einer Flüssigkeit oder als Gas unter Gasen.

Für homogen katalysierte Reaktionen werden Katalysatoren eingesetzt, die in der Regel neben Edelmetall, wie z. B. Platin, Palladium und Rhodium, auch speziell für eine Synthese zugeschnittenen Liganden enthalten. Die relativ hohen Kosten für solche Katalysatoren werden dabei sowohl von den enthaltenen Edelmetallen als auch von den meist aufwendig synthetisierten Liganden verursacht. Die Kosten des Liganden können den Wert des Edelmetalls übersteigen.

Bei der Reaktionsführung liegt der Homogenkatalysator gelöst in der Reaktionslösung vor. Deshalb ist nach Ablauf der Reaktion eine Aufarbeitung erforderlich, um den Katalysator von dem Produkt und nicht umgesetzten Edukt zurückzugewinnen und ggf. einem neuen Reaktionszyklus zuführen zu können. Die Aufarbeitung erfolgt beispielsweise durch eine Dünnfilmverdampfung, die relativ aufwendig ist und eine thermische Belastung des Katalysators darstellt.

Als neue Methode wird die Abtrennung des Katalysators durch Membranverfahren erforscht und erprobt. Dazu müssen lösemittelstabile Membranen zur Verfügung stehen, die eine sehr hohe Rückhaltung von > 99 % bei einem hohen Fluss aufweisen müssen, um ein wirtschaftliches Verfahren zu gewährleisten.

Bei allen Aufarbeitungsmethoden von homogenen Katalysatoren entstehen Verluste an Edelmetall und Ligand (Katalysator), da eine vollständige Abtrennung nicht möglich ist. Die auftretenden Verluste an Katalysator müssen für den folgenden Reaktionszyklus durch Zugabe von neuem Katalysator ausgeglichen werden und stellen neben der aufwendigen Abtrennung einen erheblichen Kostenfaktor dar.

Bisher liegen Homogenkatalysatoren gelöst in der Reaktionslösung vor. Nach Ablauf der Reaktion muss eine Abtrennung des Katalysators (Edelmetall und Ligand) vom Reaktionsgemisch (Produkte und Edukte) erfolgen. Technisch geschieht dies durch thermische Trennverfahren, z. B. Dünnschichtverdampfer, Mehrphasenkatalyse oder adsorptiver Entfernung der Schwermetallkatalysatoren (Königsberger et al. Org. Proc. Res. Dev. 2003, 7, 733).

Eine Technik, die zur Zeit erforscht wird, stellt die Abtrennung der Katalysatoren mit lösemittelstabilen Membranen dar (U. Kragl, C. Deisbach Membrane Reactors in Homogeneous catalysis. in "Applied homogeneous catalysis with organometallic Compounds", B. Cornils, W.A. Herrmann (eds.), 2. edition, 941-952, 2002, Wiley-VCH).

Bei beiden Verfahren wird eine vollständige Rückgewinnung des Katalysators nicht erreicht. Zudem ist die Aufarbeitung ein zusätzlicher Arbeitsschritt, der Personal- und Energiekosten verursacht.

Reheker et. al beschreiben in US 6,916,758 B2 das gleichzeitige Verspinnen von Polymer und Aluminium-Fasern, wobei die Aluminium-Fasern als Katalysator wirken. Hierbei ist ein Großteil der Fasern im Faserinneren enthalten und steht somit nicht für katalytische Reaktionen zur Verfügung.

Stasiak et al. beschreiben die Immobilisierung eines Homogenkatalysators (Proceedings of Chemical Nanotechnology Talks VII: Status and future of nanofibers by electrospinning. Dechema e.V., 91-92 (2006)). In diesem Fall wurde der Katalysator kovalent an ein Styrololigomer gebunden. Dieses Katalysator-Oligomer-System wurde zusammen mit Polystyrol durch electrospinning zu Nanofasern verarbeitet. Das Auswaschen des Katalysators in das umgebende Lösemittel konnte eingeschränkt werden, weil das Styrololigomer eine höhere Löslichkeit in der umgebenden Polystyrolmatrix als im Lösemittel aufwies.

Bei der Art der Durchführung von homogen katalysierten Reaktionen ist eine Aufarbeitung zur Abtrennung des Katalysators nach der Reaktion nach wie vor erforderlich. Dies kann mit verschiedenen Methoden erfolgen. Eine vollständige Rückgewinnung des Homogenkatalysators kann jedoch nicht erreicht werden.

Ausgehend von diesem Stand der Technik besteht die Aufgabe der vorliegenden Erfindung darin, einen Homogenkatalysator für die Durchführung von homogenen Katalysen bereitzustellen, wobei der bereitgestellte Homogenkatalysator ohne Verlust eines oder der Liganden eines Katalysators ohne Aktivitätsverlust in mehreren, möglichst vielen, Reaktionszyklen eingesetzt werden soll.

Diese Aufgabe wird bei dem Verfahren zum Herstellen einer Homogenkatalysatorträgereinheit gelöst, die zur Durchführung von homogenen Katalysen eingesetzt wird, das dadurch weitergebildet wird, dass Homogenkatalysatoren beweglich an die, insbesondere ebene oder gekrümmte, Oberfläche eines eine, insbesondere feste, Oberfläche aufweisenden Katalysatorträgers derart immobilisiert gebunden werden, dass
a.) die Homogenkatalysatoren jeweils unter Verwendung oder Zwischenschaltung eines Spacers an die Oberfläche des Katalysatorträgers gebunden sind, so dass der an die Oberfläche des Katalysatorträgers gebundene Spacer zwischen der Oberfläche des Katalysatorträgers und dem oder den Liganden der Homogenkatalysatoren ausgebildet ist, wodurch die Homogenkatalysatoren sich auf der von der Oberfläche des Katalysatorträgers entfernten Seite oder in dem von der Oberfläche des Katalysatorträgers entfernten Halbraum befinden,
oder
b.) die Homogenkatalysatoren ohne Zwischenschaltung eines Spacers an die Oberfläche des Katalysatorträgers gebunden sind, wodurch die Homogenkatalysatoren sich auf der von der Oberfläche des Katalysatorträgers entfernten Seite oder in dem von der Oberfläche des Katalysatorträgers entfernten Halbraum befinden.

Hierdurch wird eine Trägereinheit bereitgestellt, bei der mehrere Homogenkatalysatoren an die Oberfläche des nicht-molekular, d.h. makroskopisch vorliegenden, in Reaktionslösung unlöslichen Katalysatorträgers gebunden sind, der zur Durchführung von homogenen Katalysen eingesetzt wird, wobei die Homogenkatalysatoren im Wesentlichen frei beweglich an den von der festen Oberfläche entfernten Spacer-Enden, die nicht an die Oberfläche des Katalysatorträgers gebunden sind, angeordnet sind und gleichzeitig die Homogenkatalysatoren an die Oberfläche des Katalysatorträgers über die Spacer oder Spacer-Gruppen immobilisiert gebunden sind.

In einer Alternative sind die oder mehrere Homogenkatalysatoren an die feste und permanente Oberfläche des unlöslichen Katalysatorträgers gleichzeitig direkt, d.h. ohne Verwendung einer Spacer-Gruppe oder dergleichen, gebunden, so dass der Homogenkatalysator immobilisiert an den makroskopisch vorliegenden Katalysatorträger angeordnet ist.

Gemäß der Erfindung wird hierdurch eine heterogenisierte Homogenkatalysatorträgereinheit hergestellt, wobei die Homogenkatalysatoren an die Oberfläche eines unlöslichen Basiskörpers in Form eines Katalysatorträgers gebunden werden, ohne dass die Homogenkatalysatoren in die, insbesondere ebene, d.h. nicht-mikroporöse, Oberfläche integriert werden, so dass beispielsweise bei einer Reaktionsführung der Homogenkatalysator in einer Reaktionslösung gelöst vorliegt, während der Katalysatorträger in der Reaktionslösung permanent bzw. unlöslich vorhanden ist. Dabei werden die Homogenkatalysatoren wie bei einer normalen homogen Katalyse ohne geträgerte und immobilisierte Katalysatoren von der Reaktionslösung umspült.

Homogenkatalysatoren sind homogene Katalysatoren, die beispielsweise selektive Synthesen und eine leichte Abtrennbarkeit bzw. leichte Aufarbeitung sowie gute Wiederverwendbarkeit aufweisen. Durch die kovalente oder adsorptive Bindung der homogenen Katalysatoren unter Zwischenschaltung von Spacern, an deren einem Ende jeweils die Homogenkatalysatoren und an deren anderen Ende die Spacer an die ebene oder gekrümmte, äußere Oberfläche des Katalysatorträgers angebunden sind, werden die Homogenkatalysatoren immobilisiert.

Die vorzugweise eingesetzten Homogenkatalysatoren weisen jeweils einen für die bevorzugte Synthese entsprechenden Liganden mit einem Edelmetall auf. Beispielsweise werden als Edelmetalle bzw. Edelmetallatome für den Liganden Platin, Palladium oder Rhodium verwendet. Vor allem können die Eigenschaften der Homogenkatalysatoren über die an dem Metallzentrum oder Metallkomplex koordinierten Liganden angepasst werden. Gemäß der Erfindung sind insbesondere die Liganden frei beweglich an der Oberfläche der Katalysatorträger angebunden.

Die Erfindung beruht auf dem Gedanken, eine heterogenisierte Homogenkatalysatorträgereinheit mit einem in der Reaktionslösung unlöslichen bzw. permanent oder dauerhaft vorhandenen Katalysatorträger als Basiskörper mit einer festen und insbesondere nicht-porösen Oberfläche bereitzustellen, wobei die Homogenkatalysatoren an der Katalysatorträgeroberfläche beispielsweise durch kovalente oder adsorptive Bindungen des dazwischen angeordneten Spacers oder der Spacer-Gruppen bzw. der mit Spacern versehenen Homogenkatalysatoren immobilisiert werden, wobei die freie Beweglichkeit der an die Oberfläche des Trägers gebundenen Katalysatoren erhalten bleibt, wodurch Umsätze und Selektivität der homogenen Lösung der Homogenkatalysatoren erreicht wird.

Für die Durchführung einer Reaktion wird die hergestellte Homogenkatalysatorträgereinheit mit ihren im Halbraum frei beweglichen Homogenkatalysatoren sowie die Homogenkatalysatoren von der Reaktionslösung umspült oder durchströmt, so dass die erfindungsgemäße Homogenkatalysatorträgereinheit praktisch ohne Widerstand frei umströmt oder durchströmt wird und die Edukte hierbei in Kontakt mit dem an der Oberfläche des Katalysatorträgers beweglich immobilisierten Homogenkatalysatoren geraten, wodurch die Reaktion praktisch wie bei der Homogenkatalyse von ungebundenen Katalysatoren abläuft.

Zudem kann mit der Immobilisierung der Katalysatorkomplexe bzw. der Liganden bzw. der Homogenkatalysatoren das Problem der Verunreinigung der Reaktionsprodukte mit Katalysatorrückständen drastisch vermindert werden. Beispielsweise gelten für die Herstellung pharmakologisch aktiver Produkte strenge Grenzwerte im ppm-Bereich für die Kontamination mit Schwermetallen.

Die Immobilisierung der Homogenkatalysatoren an der Katalysatorträgeroberfläche erfolgt vorzugsweise durch eine kovalente Bindung zwischen den funktionellen Gruppen oder Spacer-Gruppen bzw. des Katalysatorliganden und der Oberfläche des Katalysatorträgers, der beispielsweise in Form eines Vlieses ausgebildet ist. Hierbei ist das Trägervlies als Katalysatorträger aus mehreren Fasern hergestellt.

Um eine hohe Katalysatordichte zu erzielen, ist gemäß einer Weiterbildung vorgesehen, dass die Homogenkatalysatoren beweglich an die nicht-poröse oder nicht-mikroporöse, insbesondere glatte, Oberfläche des Katalysatorträgers immobilisiert werden.

Hierdurch wird erreicht, dass der Katalysatorträger ein hohes Verhältnis von Oberfläche zu Volumen aufweist. Hierdurch wird die Katalysatormenge pro Volumen im Katalysatorträger im Vergleich zu einem nicht porösen Katalysatorträger deutlich erhöht. Durch die vergrößerte Oberfläche des Katalysatorträgers, z. B. eines Vlieses aus (Nano-)Fasern, pro Volumen sowie durch eine gute Zugänglichkeit des Katalysators an der äußeren Oberfläche, beispielsweise von glatten, nicht-porösen (Nano-)Fasern im Vlies, werden hohe Umsätze ohne Verlust an Selektivität erreicht.

Bevorzugterweise werden als Katalysatorträger, bevorzugterweise elektrogesponnene, Fasern oder Fäden, insbesondere glatte Nanofasern, verwendet, die zu Vliesen verarbeitet sind. Dadurch entsteht eine hohe Oberfläche für die Anbindung des Katalysators, vorzugsweise über den Liganden, an den Katalysatorträger. Somit ist der Katalysator an die Fasern bzw. deren Oberfläche gebunden und liegt insgesamt jedoch frei an der Oberfläche des Katalysatorträgers vor und ist somit für die Reaktanden einer Reaktionslösung gut zugänglich.

Durch die Immobilisierung an den Katalysatorträgern in Form eines Vlieses wird eine Heterogenisierung des Homogenkatalysators erreicht. Die erfindungsgemäßen Homogenkatalysatoren sind durch die Immobilisierung an der Oberfläche eines in der Fläche verteilten Katalysatorträgers beim Durchströmen einer Reaktionslösung direkt und ohne Druckverlust wie beim bisher bekannten Verfahren der Homogenkatalyse zugänglich. Anstelle von Rühren in einem Kessel oder Behälter wird die Reaktionslösung durch ein Vlies mit Katalysatoren im Umlauf bis zur gewünschten Umsetzung gepumpt. Durch die hohe Oberfläche des Katalysatorvlieses pro Volumen, die eine gute Zugänglichkeit des Katalysators an der äußeren Oberfläche von glatten, nicht-porösen Nanofasern im Vlies ermöglichen, werden hohe Umsätze der Reaktionslösung ohne Verlust an Selektivität sowie Aktivitätsverlust des Homogenkatalysators erreicht.

Darüber hinaus ist es von Vorteil, wenn die Homogenkatalysatoren durch eine kovalente oder adsorptive Bindung an die Oberfläche des Katalysatorträgers bzw. den Spacern oder Spacer-Gruppen immobilisiert gebunden werden.

Die Immobilisierung der Katalysatoren an der Katalysatorträgeroberfläche erfolgt vorzugsweise durch kovalente Bindung zwischen den funktionellen Gruppen bzw. Spacer-Gruppen des Katalysatorliganden und der Oberfläche der Trägerfasern im Vlies. Diese funktionellen Gruppen bzw. Spacer-Gruppen können dabei im Trägerpolymer des Katalysatorträgers, aber auch durch Zumischung anderer Mineralien, z. B. Siloxanen, oder auch durch eine Oberflächenmodifizierung, z. B. Plasmabehandlung, erreicht werden.

Insbesondere wird der Katalysatorträger, an dessen Oberfläche die Homogenkatalysatoren gebunden werden, als, vorzugsweise feste oder permanente oder in Reaktionslösung unlösliche, Partikel, Film oder Fasern bereitgestellt, die insbesondere über eine feste Oberfläche verfügen. Hierbei liegt der Katalysatorträger in nichtmolekularer bzw. in makroskopischer Form vor, d.h., dass der Katalysatorträger in einer Größe um eine oder mehrere Größenordnungen höher vorliegt als die molekular vorliegenden Homogenkatalysatoren und Spacer-Gruppen, so dass der makroskopisch ausgebildete Katalysatorträger auch über eine durchgehende, feste oder glatte Oberfläche verfügt, an der die Homogenkatalysatoren angebunden werden.

Zur Ausbildung eines Homogenkatalysators kann der Katalysatorträger in der Form von Partikeln vorliegen. Darüber hinaus können auch Filme oder Fasern als Katalysatorträger verwendet werden. Insgesamt ist es dabei wichtig, dass der Katalysatorträger ein hohes Verhältnis von Oberfläche zu Volumen aufweist, um eine hohe Katalysatordichte zu erreichen. Vorzugsweise bestehen die Katalysatorträger aus anorganischen Materialen wie Kohle, TiO₂, ZrO₂, SiO₂, Al₂O₃ und Mischung daraus.

Darüber hinaus können auch organische oder organisch-anorganisch polymere Materialen für den Katalysatorträger, wie z. B. Polyacrylnitril, Polyvinylidenfluorid, Polyacrylnitril-co-glycidylmethacrylat, Polyamidimid, Polyimid, Polyamid, Polystyrol, Polydimethylsiloxan, verwendet werden. Diese Materialien werden bevorzugterweise mit entsprechenden Methoden aus der Schmelze und/oder aus Lösung verarbeitet.

Weiterhin ist gemäß einer bevorzugten Ausführungsform vorgesehen, dass der Katalysatorträger, an dessen Oberfläche die Homogenkatalysatoren gebunden werden, als Vlies aus mehreren Fasern, insbesondere Nano-Fasern, bereitgestellt wird.

Insbesondere ist oder wird das Vlies als Katalysatorträger aus Fasern mit Durchmessern kleiner als 100 µm, vorzugsweise kleiner als 10 µm, weiter vorzugsweise kleiner als 1 µm, bereitgestellt oder hergestellt.

Bevorzugterweise ist oder wird das Vlies aus Fasern, die auch als Nanofasern bezeichnet werden, mit Durchmessern zwischen 5 nm bis 500 nm, insbesondere zwischen 20 bis 200 nm, bereitgestellt oder hergestellt. Zur Herstellung von Homogenkatalysatorträgereinheiten oder -modulen ist die Herstellung von sehr dünnen Fasern mit Dicken im Nanometerbereich von besonderem Interesse, da das Verhältnis von Oberfläche zu Fadenvolumen mit abnehmender Dicke proportional ansteigt. So können etwa aus gleichem Volumen an Material von etwa aus dem gleichen Volumen an Material von 1 cm³ und einer Dicke von 2000 µm Fasern mit 10 cm² Oberfläche hergestellt werden, bei 2 µm Dicke aus der gleichen Menge an Material Fasern von 1 m² Oberfläche und aus einer Dicke von 0,02 µm (= 20 nm) resultiert eine Oberfläche von 100 m².

Überdies wird in einer bevorzugten Ausführungsform des Verfahrens vorgeschlagen, dass die Fasern des Vlieses gemäß dem Elektrospinnen-Verfahren hergestellt sind oder werden. Hierdurch werden entsprechend geeignete Fasern im Nanometerbereich bereitgestellt, wodurch die durch Elektrospinnen hergestellten Fasern meist zu Vliesen verarbeitet werden, deren Faserdurchmesser unter 1 µm liegen. Insbesondere sind auch größere Durchmesser der Fasern des Vlieses möglich.

Bevorzugte Durchmesser der Fasern, die durch Elektrospinnen hergestellt sind, betragen 20 nm bis 200 nm. Durch die Behandlung beispielsweise von Polymerlösungen werden Fasern in einem elektrischen Feld hergestellt, wobei die Polymerlösung an einer Elektrode dosiert und durch das vorherrschende Feld von der Elektrode abgezogen und beschleunigt wird, so dass die Polymerlösung in kleine Fasern im Nanometerbereich (Durchmesser) aufgespalten wird, die sich an der Gegenelektrode zu einem Vlies anlagern.

Darüber hinaus wird die Aufgabe durch eine Homogenkatalysatorträgereinheit, die dadurch weitergebildet wird, dass Homogenkatalysatoren, insbesondere beweglich, an die, insbesondere ebene oder gekrümmte, Oberfläche eines eine, insbesondere feste, Oberfläche aufweisenden Katalysatorträgers derart immobilisiert gebunden sind, dass
a.) die Homogenkatalysatoren jeweils unter Verwendung oder Zwischenschaltung eines Spacers an die Oberfläche des Katalysatorträgers gebunden sind, so dass der an die Oberfläche des Katalysatorträgers gebundene Spacer zwischen der Oberfläche des Katalysatorträgers und dem oder den Liganden der Homogenkatalysatoren ausgebildet ist, wodurch die Homogenkatalysatoren sich auf der von der Oberfläche des Katalysatorträgers entfernten Seite oder in dem von der Oberfläche des Katalysatorträgers entfernten Halbraum befinden,
oder
b.) die Homogenkatalysatoren jeweils unter Verwendung oder Zwischenschaltung eines Spacers an die Oberfläche des Katalysatorträgers gebunden sind, wodurch die Homogenkatalysatoren sich auf der von der Oberfläche des Katalysatorträgers entfernten Seite oder in dem von der Oberfläche des Katalysatorträgers entfernten Halbraum befinden.

Hierbei sind die Homogenkatalysatoren beweglich an die nicht-poröse oder nicht-mikroporöse, insbesondere glatte, Oberfläche des Katalysatorträgers immobilisiert. Insbesondere sind die Homogenkatalysatoren durch eine kovalente oder adsorptive Bindung an die Oberfläche des Katalysatorträgers immobilisiert gebunden.

Überdies zeichnet sich die Homogenkatalysatorträgereinheit dadurch aus, dass der Katalysatorträger, an dessen Oberfläche die Homogenkatalysatoren gebunden werden, als Partikel, Film oder Faser, insbesondere Nanofaser, bereitgestellt wird oder ist. Vorzugsweise ist oder wird der Katalysatorträger, an dessen Oberfläche die Homogenkatalysatoren gebunden werden, als Vlies aus mehreren Fasern, insbesondere Nanofasern, bereitgestellt.

Bevorzugterweise ist oder wird das Vlies aus Fasern mit Durchmessern kleiner als 100 µm, vorzugsweise kleiner als 10 µm, weiter vorzugsweise kleiner als 1 µm, bereitgestellt oder hergestellt. Vorzugsweise ist oder wird das Vlies aus Fasern mit Durchmessern zwischen 5 nm bis 500 nm, insbesondere zwischen 20 nm bis 200 nm, bereitgestellt oder hergestellt.

Zudem ist es bei der Homogenkatalysatorträgereinheit von Vorteil, wenn die Fasern des Vlieses gemäß dem Elektrospinnen-Verfahren hergestellt sind oder werden.

Gemäß einer Ausführung der Homogenkatalysatorträgereinheit ist vorgesehen, dass der Katalysatorträger aus einem anorganischen Material, insbesondere Kohle, TiO₂, ZrO₂, SiO₂, Al₂O₃ oder Mischungen davon, hergestellt ist oder wird. Weiterhin ist oder wird der Katalysatorträger aus organischem Polymermaterial oder organisch-anorganischem Polymermaterial hergestellt.

Außerdem ist in einer Ausgestaltung die erfindungsgemäße Homogenkatalysatorträgereinheit erhältlich durch Ausführen der Verfahrensschritte gemäß dem voranstehend beschriebenen Verfahren, insbesondere nach einem der Ansprüche 1 bis 10.

Eine weitere Lösung der Aufgabe erfolgt durch eine Verwendung eines in Reaktionslösungen unlöslichen Katalysatorträgers zur Herstellung einer voranstehend beschriebenen Homogenkatalysatorträgereinheit, wobei zur Vermeidung von Wiederholungen auf die obigen Ausführungen ausdrücklich verwiesen wird.

Überdies erfolgt eine weitere Lösung der Aufgabe durch eine Verwendung einer erfindungsgemäßen, oben beschriebenen Homogenkatalysatorträgereinheit zur Durchführung einer homogenen Katalyse.

Durch die Bereitstellung von erfindungsgemäßen geträgerten, heterogenisierten Homogenkatalysatoren an einer Trägereinheit wird erreicht, dass ein Homogenkatalysatormodul ohne Verlust an Liganden sowie ohne Aktivitätsverlust erzielt wird, das in mehreren Reaktionszyklen eingesetzt werden kann. Insbesondere gehen bei einem nanoskaligen Trägervlies kovalent gebundene Liganden nicht verloren. Verluste an Edelmetallen aufgrund der endlichen Komplexbildungskonstante können beim Recycling (Rezyklieren) durch Neuzugabe ausgeglichen werden.

Die an der Oberfläche des Katalysatorträgers immobilisierten Katalysatoren sind aufgrund der kovalenten Anbindung gebunden und trotzdem frei in der Reaktionslösung beweglich, wodurch auch die gleichen Umsätze und Selektivitäten wie bei einem ungebundenen homogenen Katalysator erreicht werden.

Durch die Fixierung der Katalysatoren am Katalysatorträger entfällt zum einen eine aufwendige und nicht verlustfreie Abtrennung der Katalysatoren vom Reaktionsgemisch (Edukte und Produkte) nach beendeter Reaktion. Zum anderen wird durch die kovalente Anbindung der Katalysatoren ein Auswaschen der Katalysatoren aus dem Träger vermieden.

Die (Homogen-)Katalysatoren sind an der Oberfläche des Katalysatorträgers angebunden, wobei alle Katalysatormoleküle frei zugänglich für die Reaktion sind. Bei Auswahl eines entsprechenden Katalysatorträgers mit hohem Aspektverhältnis (Verhältnis von Oberfläche zu Volumen), z. B. in Form von Nanofasern oder Nanopartikeln, kann eine hohe Katalysatordichte an der Oberfläche des Trägers realisiert werden. Damit sind effiziente und kostengünstige Reaktionsführungen unter Verwendung der Homogenkatalysatoren möglich.

## Patentansprüche

1. Verfahren zum Herstellen einer Homogenkatalysatorträgereinheit, die zur Durchführung von homogenen Katalysen eingesetzt wird, **dadurch gekennzeichnet, dass** Homogenkatalysatoren beweglich an die, insbesondere ebene oder gekrümmte, Oberfläche eines eine, insbesondere feste, Oberfläche aufweisenden Katalysatorträgers derart immobilisiert gebunden werden, dass
a.) die Homogenkatalysatoren jeweils unter Verwendung oder Zwischenschaltung eines Spacers an die Oberfläche des Katalysatorträgers gebunden sind, so dass der an die Oberfläche des Katalysatorträgers gebundene Spacer zwischen der Oberfläche des Katalysatorträgers und dem oder den Liganden der Homogenkatalysatoren ausgebildet ist, wodurch die Homogenkatalysatoren sich auf der von der Oberfläche des Katalysatorträgers entfernten Seite oder in dem von der Oberfläche des Katalysatorträgers entfernten Halbraum befinden,
oder
b.) die Homogenkatalysatoren ohne Zwischenschaltung eines Spacers an die Oberfläche des Katalysatorträgers gebunden sind, wodurch die Homogenkatalysatoren sich auf der von der Oberfläche des Katalysatorträgers entfernten Seite oder in dem von der Oberfläche des Katalysatorträgers entfernten Halbraum befinden.

2. Verfahren nach Anspruch 1, **dadurch gekennzeichnet, dass** die Homogenkatalysatoren beweglich an die nicht-poröse oder nicht-mikroporöse, insbesondere glatte, Oberfläche des Katalysatorträgers immobilisiert werden.

3. Verfahren nach Anspruch 1 oder 2, **dadurch gekennzeichnet, dass** die Homogenkatalysatoren durch eine kovalente oder adsorptive Bindung an die Oberfläche des Katalysatorträgers immobilisiert gebunden werden.

4. Verfahren nach einem der Ansprüche 1 bis 3, **dadurch gekennzeichnet, dass** der Katalysatorträger, an dessen Oberfläche die Homogenkatalysatoren gebunden werden, als, insbesondere fester, Partikel, Film oder Faser bereitgestellt wird.

5. Verfahren nach einem der Ansprüche 1 bis 4, **dadurch gekennzeichnet, dass** der Katalysatorträger, an dessen Oberfläche die Homogenkatalysatoren gebunden werden, als Vlies aus mehreren Fasern bereitgestellt wird.

6. Verfahren nach Anspruch 5, **dadurch gekennzeichnet, dass** das Vlies aus Fasern mit Durchmessern kleiner als 100 µm, vorzugsweise kleiner als 10 µm, weiter vorzugsweise kleiner als 1 µm, bereitgestellt oder hergestellt ist oder wird.

7. Verfahren nach Anspruch 5 oder 6, **dadurch gekennzeichnet, dass** das Vlies aus Fasern mit Durchmessern zwischen 5 nm bis 500 nm, insbesondere zwischen 20 nm bis 200 nm, bereitgestellt oder hergestellt ist oder wird.

8. Verfahren nach einem der Ansprüche 5 bis 7, **dadurch gekennzeichnet, dass** die Fasern des Vlieses gemäß dem Elektrospinnen-Verfahren hergestellt sind oder werden.

9. Verfahren nach einem der Ansprüche 1 bis 8, **dadurch gekennzeichnet, dass** der Katalysatorträger aus einem anorganischen Material, insbesondere Kohle, TiO₂, ZrO₂, SiO₂, Al₂O₃ oder Mischungen davon, hergestellt ist oder wird.

10. Verfahren nach einem der Ansprüche 1 bis 8, **dadurch gekennzeichnet, dass** der Katalysatorträger aus organischem Polymermaterial oder organisch-anorganischem Polymermaterial hergestellt ist oder wird.

11. Homogenkatalysatorträgereinheit, **dadurch gekennzeichnet, dass** Homogenkatalysatoren, insbesondere beweglich, an die, insbesondere ebene oder gekrümmte, Oberfläche eines eine, insbesondere feste, Oberfläche aufweisenden Katalysatorträgers derart immobilisiert gebunden sind, dass
a.) die Homogenkatalysatoren jeweils unter Verwendung oder Zwischenschaltung eines Spacers an die Oberfläche des Katalysatorträgers gebunden sind, so dass der an die Oberfläche des Katalysatorträgers gebundene Spacer zwischen der Oberfläche des Katalysatorträgers und dem oder den Liganden der Homogenkatalysatoren ausgebildet ist, wodurch die Homogenkatalysatoren sich auf der von der Oberfläche des Katalysatorträgers entfernten Seite oder in dem von der Oberfläche des Katalysatorträgers entfernten Halbraum befinden,
oder
b.) die Homogenkatalysatoren jeweils unter Verwendung oder Zwischenschaltung eines Spacers an die Oberfläche des Katalysatorträgers gebunden sind, wodurch die Homogenkatalysatoren sich auf der von der Oberfläche des Katalysatorträgers entfernten Seite oder in dem von der Oberfläche des Katalysatorträgers entfernten Halbraum befinden.

12. Homogenkatalysatorträgereinheit nach Anspruch 11, **dadurch gekennzeichnet, dass** die Homogenkatalysatoren beweglich an die nicht-poröse oder nicht-mikroporöse, insbesondere glatte, Oberfläche des Katalysatorträgers immobilisiert sind.

13. Homogenkatalysatorträgereinheit nach Anspruch 11 oder 12, **dadurch gekennzeichnet, dass** die Homogenkatalysatoren durch eine kovalente oder adsorptive Bindung an die Oberfläche des Katalysatorträgers immobilisiert gebunden sind.

14. Homogenkatalysatorträgereinheit nach einem der Ansprüche 11 bis 13, **dadurch gekennzeichnet, dass** der Katalysatorträger, an dessen Oberfläche die Homogenkatalysatoren gebunden werden, als Partikel, Film oder Faser bereitgestellt wird.

15. Homogenkatalysatorträgereinheit nach einem der Ansprüche 11 bis 14, **dadurch gekennzeichnet, dass** der Katalysatorträger, an dessen Oberfläche die Homogenkatalysatoren gebunden werden, als Vlies aus mehreren Fasern bereitgestellt wird.

16. Homogenkatalysatorträgereinheit nach Anspruch 15, **dadurch gekennzeichnet, dass** das Vlies aus Fasern mit Durchmessern kleiner als 100 µm, vorzugsweise kleiner als 10 µm, weiter vorzugsweise kleiner als 1 µm, bereitgestellt oder hergestellt ist oder wird.

17. Homogenkatalysatorträgereinheit nach Anspruch 15 oder 16, **dadurch gekennzeichnet, dass** das Vlies aus Fasern mit Durchmessern zwischen 5 nm bis 500 nm, insbesondere zwischen 20 nm bis 200 nm, bereitgestellt oder hergestellt ist oder wird.

18. Homogenkatalysatorträgereinheit nach einem der Ansprüche 15 bis 17, **dadurch gekennzeichnet, dass** die Fasern des Vlieses gemäß dem Elektrospinnen-Verfahren hergestellt sind oder werden.

19. Homogenkatalysatorträgereinheit nach einem der Ansprüche 11 bis 18, **dadurch gekennzeichnet, dass** der Katalysatorträger aus einem anorganischen Material, insbesondere Kohle, TiO₂, ZrO₂, SiO₂, Al₂O₃ oder Mischungen davon, hergestellt ist oder wird.

20. Homogenkatalysatorträgereinheit nach einem der Ansprüche 11 bis 18, **dadurch gekennzeichnet, dass** der Katalysatorträger aus organischem Polymermaterial oder organisch-anorganischem Polymermaterial hergestellt ist oder wird.

21. Homogenkatalysatorträgereinheit nach einem der Ansprüche 11 bis 20, erhältlich durch Ausführen der Verfahrensschritte gemäß dem Verfahren nach einem der Ansprüche 1 bis 10.

22. Verwendung eines Katalysatorträgers zur Herstellung eines Homogenkatalysatorträgereinheit gemäß dem Verfahren nach einem der Ansprüche 11 bis 21.

23. Verwendung einer Homogenkatalysatorträgereinheit nach einem der Ansprüche 11 bis 21 zur Durchführung einer homogenen Katalyse.
